# EUROPÄISCHE PATENTSCHRIFT

(11) **EP 4 695 974 B1**
(45) Veröffentlichungstag und Bekanntmachung des Hinweises auf die Patenterteilung: **11.11.2026**
(21) Anmeldenummer: 24728905.1
(22) Anmeldetag: 14.05.2024
(51) Int. Cl.: H04L 67/10, H04L 67/12, H04L 67/55

(54) **VERFAHREN ZUR ÜBERMITTLUNG EINES DATENSTROMS IN EINEM PUBLISH-SUBSCRIBE-SYSTEM UND DATENSTROMPRODUZENT**
METHOD FOR TRANSFERRING A DATA STREAM IN A PUBLISH-SUBSCRIBE SYSTEM AND DATA STREAM PRODUCER
PROCÉDÉ DE TRANSMISSION D'UN FLUX DE DONNÉES DANS UN SYSTÈME DE PUBLICATION-ABONNEMENT ET GÉNÉRATEUR DE FLUX DE DONNÉES

(30) Priorität: 25.05.2023 EP 23175413
(43) Veröffentlichungstag der Anmeldung: 18.02.2026
(73) Patentinhaber: Siemens Aktiengesellschaft, 80333 München (DE)
(72) Erfinder: HOHL, Hubertus, 85748 Garching (DE); SAUER, Markus, 85748 Garching (DE)
(74) Vertreter: Siemens Patent Attorneys
(86) Internationale Anmeldenummer: PCT/EP2024/063144
(87) Internationale Veröffentlichungsnummer: WO 2024/240535

(56) Entgegenhaltungen:
- US-A1- 2019 297 131
- SHAHRI EHSAN ET AL: "Extending MQTT with Real-Time Communication Services Based on SDN", SENSORS, vol. 22, no. 9, 20 April 2022 (2022-04-20), pages 3162, XP093031134, DOI: 10.3390/s22093162

## Beschreibung

Die Erfindung betrifft ein Verfahren zur Übermittlung eines Datenstroms in einem Publish-Subscribe-System und einen Datenstromproduzenten.

Bei dezentral organisierten IoT-Systemen besteht ein Bedarf an Verfahren zur Übermittlung von Datenströmen, mittels welchen autonome, lose gekoppelte Systemteilnehmer, etwa IoT-Geräte, mittels Publish-Subscribe-Kommunikation Nachrichten austauschen.

Dieser Bedarf besteht insbesondere im Zuge der Industrie 4.0., d.h. der flexiblen und/oder autonomen Produktion und Logistik und deren durchgehender Digitalisierung mit Technologien aus den Bereichen IoT, AI, Edge, Cloud, Mobile und Distributed Computing aber auch aus den Bereichen neuer Kommunikationstechnologien, z.B. 5G und 6G. In diesem Bereich steigt die Nachfrage an der Übertragung von Datenströmen, welche kontinuierliche Datensätze bilden und welche von IoT-Systemkomponenten aus dem IT- und OT-Bereich in hoher Frequenz und/oder mit großem Umfang fortlaufend bereitgestellt werden. Solche Datenströme werden regelmäßig zum Zwecke der Datenanalyse, Weiterverarbeitung und Speicherung an konsumierende Systemkomponenten in industriellen Arbeitsumgebungen übermittelt.

Shahri Ehsan et al. ("Extending MQTT with Real-Time Communication Services Based on SDN", SENSORS, Bd. 22, Nr. 9, 20. April 2022 (2022-04-20), Seite 3162, XP093031134, DOI: 10.3390/s22093162) offenbaren einen Satz von Erweiterungen für das MQTT-Protokoll.

US 2019/297131 A1 beschreibt Verfahren, Systeme und Geräte, einschließlich Computerprogramme auf einem ersten Speichermedium, zum Erhalten einer ersten Nachricht auf einem ersten Kanal einer Mehrzahl von Kanälen, wobei die erste Nachricht ein Videoeinzelbild aus einer Mehrzahl von Videoeinzelbildern enthält sowie Metadaten, welche die Charakteristiken des Videoeinzelbildes beschreiben.

Typische Beispiele der Anwendung solcher Datenströme sind kontinuierlich fortlaufende telemetrische Prozessdaten eines Fertigungs- oder Arbeitsverfahrens, die in einer Serverless-Edge-Cloudinfrastruktur in funktionalen Pipelines verarbeitet werden, und/oder hochfrequente und/oder großvolumige Felddaten aus Feldgeräten und Sensorsystemen, wie insbesondere Ultraschall-, Infrarot- oder tomografische Aufnahmen und/oder aufgezeichnete oder Echtzeit-Audio- und/oder -Videoströme, oder ein Upload oder Download von Dateien oder ein Export oder Import von Datenbeständen von oder zu externen Systemen. Häufig ist eine Verarbeitung solcher Datenströme in zeitkritischen Anwendungskontexten oder (Quasi)-Echtzeitsystemen erforderlich.

Die Aufgabe der vorliegenden Erfindung besteht darin, solche Datenströme mittels Publish-Subscribe-Nachrichten zu ermöglichen.

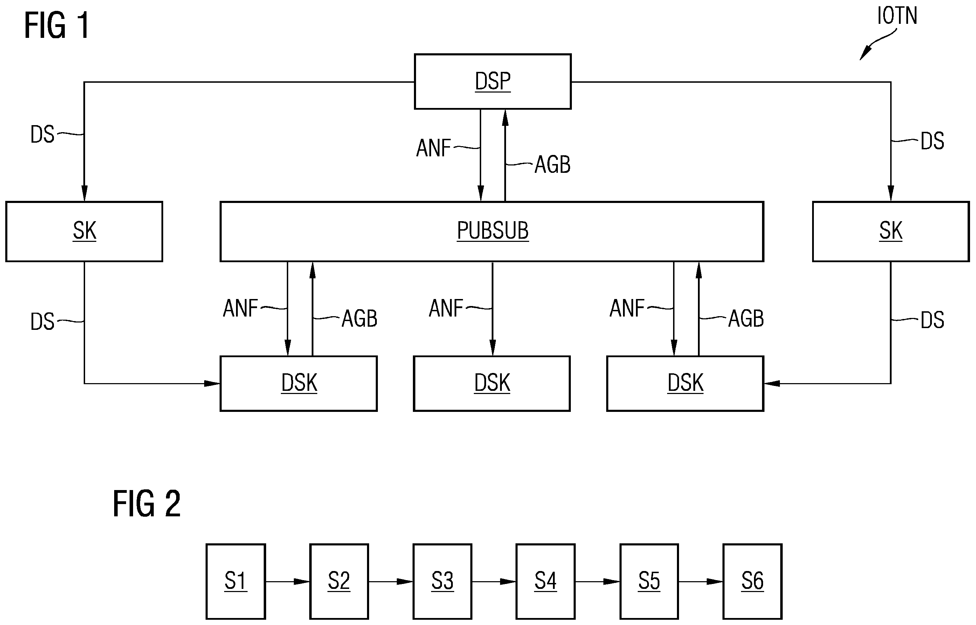

Diese Aufgabe der Erfindung wird mit einem Verfahren mit den in Anspruch 1 angegebenen Merkmalen sowie mit einem Datenstromproduzenten mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Übermittlung eines Datenstroms in einem Publish-Subscribe-System werden Angebote für einen oder mehrere Seitenkanäle zur Übermittlung des Datenstroms mittels Publish-Subscribe-Nachrichten ausgeschrieben und Angebote von Seitenkanälen mittels Publish-Subscribe-Nachrichten entgegengenommen, wobei die Angebote einer Prüfung unterzogen werden und ein oder mehrere Seitenkanäle abhängig von einem Ergebnis der Prüfung zur Übermittlung des Datenstroms herangezogen werden.

Bei dem erfindungsgemäßen Verfahren können mittels Publish-Subscribe-Nachrichten, welche selbst nicht zur Übermittlung kontinuierlicher Datenströme eingerichtet sind, dennoch Datenströme übermittelt werden. Publish-Subscribe-Nachrichten können selbst eine solche Übertragung von Datenströmen regelmäßig nicht gewährleisten, da die Transportprotokolle von Publish-Subscribe-Nachrichten zur Verbreitung diskreter, vollständiger und in sich abgeschlossener Informationen, wie insbesondere Signale und/oder Ereignisse und/oder Statusmeldungen, in Form von Nachrichten mit beschränkter Payload konzipiert sind, welche sich isoliert, d.h. unabhängig von anderen Nachrichten codieren und interpretieren lassen. Dies trifft auf die vorgenannten kontinuierlichen Datenströme ohne Weiteres nicht zu. Des Weiteren können Publish-Subscribe-Nachrichten Echtzeitanforderungen oder Quasiechtzeitanforderungen nicht berücksichtigen, da hierzu spezialisierte echtzeitkommunikationsfähige Transportprotokolle über eine Punktzu-Punkt-Verbindung zum Einsatz kommen, wie insbesondere das Transportprotokoll WebRTC beim Audiostreaming und/oder beim Videostreaming.

Bei brokerbasierten Publish-Subscribe-Systemen, bei welchen die Kommunikation nach etablierten Standards, wie dem MQTT-Standard erfolgt, würde das Routen eines fortlaufenden Datenstroms über den Broker - in Form einzelner Nachrichten mit gestückelten Datenblöcken - zu einer erhöhten Belastung des Brokers und zu erhöhten Latenzzeiten bei der Nachrichtenzustellung führen, was den Durchsatz des Publish-Subscribe-Systems negativ beeinflusst und Überlastungen im Netzwerk verursachen kann. Bei dem erfindungsgemäßen Verfahren hingegen werden Datenströme auf vom Publish-Subscribe-System getrennten Kommunikationskanälen übermittelt, die zwischen Sendern und Empfängern dynamisch zur Laufzeit und erst bei Bedarf über das Publish-Subscribe System so ausgehandelt werden, dass eine optimale Übertragungseffizienz zwischen Sender und Empfänger erzielt werden kann. Sender werden im Rahmen der vorliegenden Erfindung auch als Datenstromproduzenten bezeichnet, während Empfänger als Datenstromkonsumenten bezeichnet werden.

Bei dem erfindungsgemäßen Verfahren kann also ein Ausschreiben von Angeboten für einen oder mehrere Seitenkanäle sowie ein Entgegennehmen von Angeboten von Seitenkanälen in gewohnter Weise mittels Publish-Subscribe-Nachrichten erfolgen. Insoweit bleiben die Kommunikationsvorgänge von Publish-Subscribe-Systemen unberührt und das erfindungsgemäße Verfahren erfordert insoweit vorteilhaft keine besonderen Anpassungen.

Ein industrielles Netzwerk, welches bereits ein Publish-Subscribe-System für die Kommunikation von Komponenten des Publish-Subscribe-Systems nutzt, kann mittels des erfindungsgemäßen Verfahrens vorteilhaft einfach um neue Typen von Datenströmen und deren Übertragungsprotokolle erweitert werden, da nur die betroffenen Datenstromproduktionskomponenten und Datenstromkonsumkomponenten zur Realisierung der Seitenkanäle verändert werden müssen.

Erfindungsgemäß bleiben folglich grundlegende Vorteile eines Publish-Subscribe-Systems, wie die Ermöglichung von Latenzzeiten und Durchsatz, prinzipiell erhalten, da nur ein Verabreden von Seitenkanälen und/oder deren Parameter mittels Publish-Subscribe-Nachrichten erfolgt, nicht aber die Übertragung von Datenströmen.

Bevorzugt erfolgt nach dem erfindungsgemäßen Verfahren eine Übermittlung des Datenstroms über den einen oder die mehreren Seitenkanäle selbst nicht als oder mittels Publish-Subscribe-Nachrichten. Erfindungsgemäß werden zwar die Angebote für den einen oder die mehreren Seitenkanäle zur Übermittlung des Datenstroms mittels Publish-Subscribe-Nachrichten ausgeschrieben und es werden Angebote von Seitenkanälen mittels Publish-Subscribe-Nachrichten entgegengenommen und die Angebote einer Prüfung unterzogen werden, aber das Heranziehen des einen oder der mehreren Seitenkanäle selbst abhängig von einem Ergebnis der Prüfung zur Übermittlung des Datenstroms, mithin das Übermitteln des Datenstroms über den oder die Seitenkanäle selbst, erfolgt zweckmäßig nicht als oder mittels Publish-Subscribe-Nachrichten, sondern vorzugsweise als oder mittels Nachrichten eines davon verschiedenen Protokolls.

In einer bevorzugten Weiterbildung des erfindungsgemäßen Verfahrens enthalten die Angebote für den einen oder die mehreren Seitenkanäle Parameter zur Übermittlung des Datenstroms und die Prüfung berücksichtigt die Parameter und die Übermittlung des Datenstroms erfolgt entsprechend der Parameter.

Zweckmäßig umfassen bei dem erfindungsgemäßen Verfahren die Parameter eine Endpunktadresse des Seitenkanals.

Bei dem Verfahren gemäß der Erfindung umfassen die Parameter vorzugsweise einen oder mehrere Transportprotokolle für den Seitenkanal SK und/oder einen Inhaltstyp des Datenstroms, insbesondere Video und/oder Audio, und/oder eine Kodierung, insbesondere ein MPEG-4-Format, des Datenstroms.

In dieser Weiterbildung der Erfindung kann der jeweilige Typ des Datenstroms vorteilhaft mit einem solchen dafür angepassten Übertragungsprotokoll übertragen werden, das dem jeweiligen Stand der Technik entspricht. Entsprechende Vorteile ergeben sich analog für weitere Parameter der Kommunikation über den jeweiligen Seitenkanal.

Ein industrielles Netzwerk, welches bereits ein Publish-Subscribe-System für die Kommunikation von Komponenten des Publish-Subscribe-Systems nutzt, kann mittels des erfindungsgemäßen Verfahrens vorteilhaft einfach um neue Typen von Datenströmen und deren Übertragungsprotokolle erweitert werden, da nur die betroffenen Datenstromproduktionskomponenten und Datenstromkonsumkomponenten zur Realisierung der Seitenkanäle verändert werden müssen.

In einer bevorzugten Weiterbildung des erfindungsgemäßen Verfahrens umfassen die Parameter eine Datenrate und/oder eine Dienstgüte, des Datenstroms.

Publish-Subscribe-Nachrichten ermöglichen es in dieser Weiterbildung der Erfindung vorteilhaft, flexibel eine optimale Übertragungseffizienz für Datenströme zwischen Sendern und Empfängern auszuhandeln, welche den Anforderungen sowohl senderseitig als auch empfängerseitig gerecht werden. Insbesondere können auf diese Weise Probleme vermieden werden, die entstehen, wenn etwa Sender einen Datenstrom in einer höheren Datenrate senden als Empfänger empfangen oder verarbeiten können.

Bei dem Verfahren gemäß der Erfindung wird der Datenstrom insbesondere von einem Datenstromproduzenten zu einem Datenstromkonsumenten aufgebaut.

Mittels der erfindungsgemäß verwendeten Publish-Subscribe-Nachrichten lassen sich Sender und Empfänger von Datenströmen zur Übertragung von Datenströmen einfach lose koppeln. Insbesondere sind Datenstromproduzenten Sender des Datenstroms und Datenstromkonsumenten Empfänger des jeweiligen Datenstroms. Zur Übertragung müssen Datenstromproduzenten kein Vorabwissen über den Datenstromkonsumenten haben und insbesondere Verbindungsdaten wie dessen Endpunktadresse initial nicht kennen. Eine Systemkonfiguration von Datenstromproduzenten ist erfindungsgemäß insoweit nicht eigens nötig, was eine ad-hoc Übertragung von Datenströmen ermöglicht und den Aufwand zur Konfiguration und Inbetriebnahme von Datenstromproduzenten und Datenstromkonsumenten signifikant reduziert.

Besonders bevorzugt ist oder sind bei dem erfindungsgemäßen Verfahren der oder die Datenstromkonsument/en und/oder der oder die Datenstromproduzent/en Komponente/n eines, insbesondere industriellen, Internet-der-Dinge-Systems.

Der erfindungsgemäße Datenstromproduzent umfasst insbesondere einen Prozessor und ist ausgebildet zur Ausführung eines erfindungsgemäßen Verfahrens wie vorhergehend beschrieben.

Der erfindungsgemäße Datenstromproduzent ist insbesondere eingerichtet und ausgebildet, die bevorzugten Weiterbildungen des erfindungsgemäßen Verfahrens auszuführen. Es ergeben sich für den erfindungsgemäßen Datenstromproduzenten dieselben Vorteile, wie sie bereits zum erfindungsgemäßen Verfahren genannt worden sind.

Vorzugsweise ist bei dem erfindungsgemäßen Datenstromproduzenten der Prozessor zur Ausführung des erfindungsgemäßen Verfahrens wie vorhergehend beschrieben eingerichtet.

Der erfindungsgemäße Datenstromproduzent ist zweckmäßig ein industrielles Internet-der-Dinge-Gerät und/oder umfasst eine Kamera und/oder ein Mikrophon, das oder die zweckmäßig zur Generierung des Datenstroms ausgebildet ist.

Nachfolgend wird die Erfindung anhand eines in der Zeichnung dargestellten Ausführungsbeispiels näher erläutert.

Die Zeichnungsfigur 1 zeigt ein Internet-der-Dinge-Netzwerk, das nachfolgend auch überwiegend als IoT-Netzwerk IOTN bezeichnet wird. Das IoT-Netzwerk IOTN umfasst im dargestellten Ausführungsbeispiel Datenstromkonsumenten DSK und einen Datenstromproduzenten DSP. Datenstromkonsumenten DSK und Datenstromproduzent DSP sind im dargestellten Ausführungsbeispiel als miteinander drahtlos vernetzte Komponenten einer Fertigungsanlage realisiert. Die Komponenten der Fertigungsanlage stehen miteinander über ein Publish-Subscribe-System PUBSUB in Verbindung. Die Datenstromkonsumenten DSK sind dezentrale Steuergeräte, die kontinuierliche Messignale in Form eines Videofeeds erhalten. Der Videofeed wird von dem Datenstromproduzenten DSP bereitgestellt, der mittels einer computergesteuerten Überwachungskamera gebildet ist. Mittels des Videofeeds können die Datenstromkonsumenten, d. h. die Steuergeräte, Prozessparameter überwachen und Steuergrößen zur Steuerung der Prozessparameter steuern. Dabei erhält jedes der dezentralen Steuergeräte jeweils eine Kopie des gesamten Videofeeds. Der Datenstromproduzent DSP übermittelt den Datenstrom DS also jedem der Datenstromkonsumenten DSK.

Bei dem dargestellten IoT-Netzwerk IOTN werden die Datenströme DS über einen Seitenkanal SK, d.h. über einen separaten, vom Publish-Subscribe-System PUBSUB getrennten, Kommunikationskanal mit einem spezifischen Transportprotokoll, das für den jeweiligen Typ des Datenstroms geeignet ist und welches im vorliegenden Beispiel nicht zur Übertragung von Datenströmen als Publish-Subscribe-Nachrichten ausgebildet ist, übertragen. Der Seitenkanal SK wird zur Laufzeit bei Bedarf zwischen Datenstromproduzent DSP und Datenstromkonsument DSK dynamisch über das vorhandene Publish-Subscribe-System dezentral mit dem Ziel ausgehandelt, einen optimalen Abgleich zwischen den Anforderungen des Datenstromproduzenten und denen des Datenstromkonsumenten zu erzielen.

Dazu ist der Datenstromproduzent DSP über das Publish-Subscribe-System PUBSUB mit allen Datenstromkonsumenten DSK lose gekoppelt verbunden. Ein Datenstromproduzent DSP schickt über das Publish-Subscribe-System PUBSUB eine Anfrage ANF zur Übertragung eines Datenstroms DS an alle interessierten Datenstromkonsumenten DSK, empfängt deren Angebote AGB, baut Seitenkanäle SK zu den Angebotserstellern auf und überträgt den Datenstrom DS auf jedem einzelnen Seitenkanal SK an die jeweiligen Datenstromkonsumenten DSK.

Das erfindungsgemäße Verfahren umfasst die nachfolgend beschriebenen Schritte:
Die Schritte S1, S2 und S3 betreffen ein Abgleichverfahren zur Etablierung von Seitenkanälen SK mittels Publish-Subscribe-Kommunikation zwischen dem Datenstromproduzenten DSP und den Datenstromkonsumenten DSK, die Angebote AGB zum Konsum des Datenstroms abgeben. Die Schritte S4, S5 und S6 hingegen betreffen die nachfolgende Übertragung des Datenstroms über die etablierten Seitenkanäle SK vom Datenstromproduzenten DSP zu den Datenstromkonsumenten DSK.

Im ersten Schritt S1, der einen Anfrageschritt bildet, richtet der Datenstromproduzent DSP ein Abonnement auf dem Topic "Seitenkanalangebot" unter Angabe einer eindeutigen Anfragekennung ein und publiziert danach eine Nachricht auf dem Topic "Seitenkanalanfrage" unter Angabe dieser Anfragekennung und spezifischer Anforderungsparameter in ihrer Payload. Solche spezifischen Anforderungsparameter spezifizieren die verfügbaren Transportprotokolle für den Seitenkanal SK und weitere Charakteristiken des zu übertragenden Datenstroms DS, wie beispielsweise einen Inhaltstyp des Datenstroms DS, vorliegend Video, und eine Kodierung, vorliegend ein MPEG-4-Format, des Datenstroms DS. Alternativ kann in weiteren Ausführungsbeispielen der Inhaltstyp ein Audiosignal angeben, wobei der Videofeed in diesen weiteren Ausführungsbeispielen durch einen Audiofeed eines Überwachungsmikrofons ersetzt ist. Ferner umfassen weitere Charakteristiken des Datenstroms DS gegebenenfalls vorgegebene Datenkompressionsverfahren, eine minimal mögliche und eine maximal mögliche Datenrate, eine gewünschte Datenrate und Garantien hinsichtlich der Dienstgüte, auch als (engl.) Quality-of-Service bezeichnet.

Die Datenstromkonsumenten DSK haben im zweiten Schritt S2, welcher einen Angebotsschritt bildet, dauerhaft ein Abonnement auf das Topic "Seitenkanalanfrage" mit beliebiger Anfragekennung als Wildcard eingerichtet. Beim Empfang einer Nachricht auf diesem Topic wird geprüft, ob die Anforderungen des jeweiligen Datenstromkonsumenten DSK an den zu übertragenden Datenstrom DS mit den Anforderungen in der Payload in Übereinstimmung gebracht werden können. Ist dies nicht möglich, wird durch den jeweiligen Datenstromkonsumenten DSK kein Angebot abgegeben. Andernfalls wird ein Angebot erstellt und als Payload auf dem Topic "Seitenkanalangebot" unter Angabe der korrelierten Anfragekennung publiziert. Das Angebot umfasst die Anforderungsparameter des Datenstromkonsumenten DSK und zusätzlich konkrete Verbindungsparameter, u.a. eine Endpunktadresse, die es dem Datenstromproduzenten DSP ermöglicht, einen Seitenkanal SK zum Datenstromkonsument aufzubauen.

In einem dritten Schritt S3, welcher einen Angebotsauswahlschritt bildet, empfängt der Datenstromproduzent DSP Angebotsnachrichten der Angebotsersteller auf dem im ersten Schritt S1 eingerichteten Abonnement und sammelt diese, bis eine gewisse Angebotszeitspanne verstrichen ist. Danach löst er das Abonnement auf, so dass zu spät kommende Angebote nicht mehr zugestellt werden. Der Datenstromproduzent DSP gleicht dann jedes eingegangene Angebot mit seinen Anforderungsparametern, die in der Anfrage ANF gestellt wurden, ab. Alle Angebote AGB, die sowohl seine Anforderungsparameter als auch die Anforderungsparameter des jeweiligen Angebotserstellers erfüllen, werden für die Etablierung eines Seitenkanals und die Übertragung über diesen jeweiligen Seitenkanal ausgewählt.

In einem vierten Schritt S4, welcher einen Einrichtungsschritt bildet, öffnet der Datenstromproduzent DSP je einen Seitenkanal SK zu jedem ausgewählten Angebotsersteller, also jedem ausgewählten Datenstromkonsumenten DSK, indem eine Verbindung über ein den gemeinsamen Anforderungen genügendes Transportprotokoll mit den abgeglichenen Anforderungsparametern zu der im Angebot angegebenen Endpunktadresse aufgebaut wird.

Der Datenstromproduzent DSP codiert und übermittelt den Datenstrom in einem fünften Schritt S5 simultan über die geöffneten Seitenkanäle SK. Simultan decodieren die Datenstromkonsumenten DSK die übermittelten Daten und reichen sie an weiterverarbeitende Komponenten weiter.

In einem sechsten Schritt S6, einem Beendigungsschritt, ist der Datenstrom DS pro Seitenkanal SK vollständig übertragen oder der Datenstrom DS soll nicht länger vom jeweiligen Datenstromkonsumenten DSK konsumiert werden. Im Schritt S6 wird dann der Seitenkanal SK geschlossen. Dieser sechste Schritt S6 kann i.d.R. sowohl senderseitig als auch empfangsseitig, d. h. sowohl seitens des Datenstromproduzenten DSP als auch seitens des Datenstromkonsumenten DSK, initiiert werden.

Die vorhergehend beschriebenen Schritte des erfindungsgemäßen Verfahrens, welche den Abgleich der sender- und empfängerseitigen Anforderungen, d. h. der Anforderungsparameter, an die Übertragung betreffen, haben zum Ziel, ein optimales Übertragungsprotokoll mit optimalen Übertragungsparametern zu finden, dass sowohl Datenstromproduzent DSP als auch Datenstromkonsument DSK technisch unterstützen. Ein Datenstromkonsument DSK wird bei dem beschriebenen Verfahren nur dann berücksichtigt, wenn mindestens eines der Transportprotokolle in seinem Angebot übereinstimmt mit den in der Anfrage spezifizierten Transportprotokollen, nachfolgend auch kurz als Protokoll bezeichnet. Wenn Datenstromkonsument DSK und Datenstromproduzent DSP maximale Datenraten vorgeben, so wird vom Sender sichergestellt, dass die ausgewählte Übertragungsrate das Minimum der maximalen Datenraten von Datenstromkonsument DSK und Datenstromproduzent DSP nicht überschreitet, d. h., dass die beiden maximalen Datenraten zugleich erfüllt sind. Wenn Datenstromkonsument DSK und Datenstromproduzent DSP jeweils minimale Datenraten vorgeben, so wird vom Sender sichergestellt, dass die ausgewählte Übertragungsrate das Maximum der beiden minimalen Datenraten nicht unterschreitet, d. h., dass die beiden minimalen Datenraten zugleich erfüllt sind. Sinngemäß gilt dieser Abgleich auch für alle weiteren Anforderungsparameter.

Der Seitenkanal SK wird vorliegend im Client-Server-Modell betrieben, wobei der Datenstromproduzent DSP die Rolle des Clients einnimmt, der den Übertragungsdienst vom Datenstromkonsumenten DSK, der die Rolle des Servers einnimmt, anfordert. Da die den Datenstromkonsumenten DSK zugeordneten Serverdienste dauerhaft in Betrieb sind und auf die in den Angeboten AGB angegebenen Endpunktadressen lauschen, kann ein Client eine Verbindung mittels eines Seitenkanals SK zu einem Server aufbauen, ohne vorher den Datenstromkonsumenten DSK darüber zu informieren. Das bedeutet, dass der Datenstromproduzent DSP den Angebotserstellern keine Bestätigungsnachrichten schicken muss, aus denen hervorgeht, ob deren Angebote AGB berücksichtigt wurden. Ein solcher zusätzlicher Schritt im beschriebenen Verfahren wäre nur nötig, wenn der vom Angebotsersteller betriebene Serverdienst verzögert, d.h. erst bei Bedarf, hochgefahren werden soll, wenn dessen abgegebenes Angebot AGB berücksichtigt wurde.

## Patentansprüche

1. Verfahren zur Übermittlung eines Datenstroms (DS) in einem Publish-Subscribe-System (PUBSUB), bei welchem Angebote für einen oder mehrere Seitenkanäle (SK) zur Übermittlung des Datenstroms (DS) mittels Publish-Subscribe-Nachrichten ausgeschrieben werden und Angebote (AGB) von Seitenkanälen (SK) mittels Publish-Subscribe-Nachrichten entgegengenommen werden, wobei die Angebote (AGB) einer Prüfung unterzogen werden und ein oder mehrere Seitenkanäle (SK) abhängig von einem Ergebnis der Prüfung zur Übermittlung des Datenstroms (DS) herangezogen werden, **dadurch gekennzeichnet, dass** eine Übermittlung des Datenstroms (DS) über den einen oder die mehreren Seitenkanäle (SK) selbst nicht als oder mittels Publish-Subscribe-Nachrichten erfolgt.

2. Verfahren nach dem vorhergehenden Anspruch, bei welchem die Angebote für den einen oder die mehreren Seitenkanäle (SK) Parameter zur Übermittlung des Datenstroms (DS) enthalten und die Prüfung die Parameter berücksichtigt und die Übermittlung des Datenstroms (DS) entsprechend der Parameter erfolgt.

3. Verfahren nach einem der vorhergehenden Ansprüche, bei welchem die Parameter eine Endpunktadresse des Seitenkanals (SK) umfassen.

4. Verfahren nach einem der vorhergehenden Ansprüche, bei welchem die Parameter ein oder mehrere Transportprotokolle für den Seitenkanal (SK) und/oder einen Inhaltstyp des Datenstroms (DS), insbesondere Video und/oder Audio, und/oder eine Kodierung, insbesondere ein MPEG-4-Format, des Datenstroms (DS), umfassen.

5. Verfahren nach einem der vorhergehenden Ansprüche, bei welchem die Parameter eine Datenrate und/oder eine Dienstgüte, des Datenstroms (DS) umfassen.

6. Verfahren nach einem der vorhergehenden Ansprüche, bei welchem der Datenstrom (DS) jeweils von einem Datenstromproduzenten (DSP) zu einem Datenstromkonsumenten (DSK) aufgebaut wird.

7. Verfahren nach einem der vorhergehenden Ansprüche, bei welchem der oder die Datenstromkonsument/en (DSK) und/oder der oder die Datenstromproduzent/en (DSP) Komponenten eines, insbesondere industriellen, Internet-der-Dinge-Systems (IOTN) ist oder sind.

8. Datenstromproduzent, insbesondere umfassend einen Prozessor, ausgebildet zur Ausführung eines Verfahrens gemäß einem der vorhergehenden Ansprüche.

9. Datenstromproduzent nach dem vorhergehenden Anspruch, bei welchem der Prozessor zur Ausführung eines Verfahrens gemäß einem der Ansprüche 1 bis 8 eingerichtet ist.

10. Datenstromproduzent nach einem der Ansprüche 8 bis 9, welches ein industrielles Internet-der-Dinge-Gerät ist und/oder eine Kamera umfasst und/oder ein Mikrophon umfasst.

## Claims

1. Method for transmitting a data stream (DS) in a publish-subscribe system (PUBSUB), in which offers for one or more side channels (SK) for transmitting the data stream (DS) by means of publish-subscribe messages are tendered and offers (AGB) of side channels (SK) by means of publish-subscribe messages are received, wherein the offers (AGB) are checked and one or more side channels (SK) are used to transmit the data stream (DS) depending on a result of the check, **characterized in that** the data stream (DS) is not transmitted via the one more side channels (SK) themselves as or by means of publish-subscribe messages.

2. Method according to the preceding claim, in which the offers for the one or more side channels (SK) contain parameters for transmitting the data stream (DS) and the check takes the parameters into account and the data stream (DS) is transmitted in accordance with the parameters.

3. Method according to one of the preceding claims, in which the parameters include an endpoint address of the side channel (SK).

4. Method according to one of the preceding claims, in which the parameters include one or more transport protocols for the side channel (SK) and/or a content type of the data stream (DS), in particular video and/or audio, and/or a coding, in particular an MPEG-4 format, of the data stream (DS).

5. Method according to one of the preceding claims, in which the parameters include a data rate and/or a service quality of the data stream (DS).

6. Method according to one of the preceding claims, in which the data stream (DS) is constructed in each case from a respective data stream producer (DSP) to a data stream consumer (DSK).

7. Method according to one of the preceding claims, in which the data stream consumer/consumers (DSK) and/or the data stream producer/producers (DSP) is a component/are components of an, in particular industrial, Internet-of-Things system (IOTN).

8. Data stream producer, in particular comprising a processor, designed to execute a method according to one of the preceding claims.

9. Data stream producer according to the preceding claim, in which the processor is set up to execute a method according to one of Claims 1 to 8.

10. Data stream producer according to one of Claims 8 to 9, which is an industrial Internet-of-Things device and/or comprises a camera and/or comprises a microphone.

## Revendications

1. Procédé de transmission d'un flux de données (DS) dans un système de publication-abonnement (PUBSUB), dans lequel des offres pour un ou plusieurs canaux secondaires (SK) pour la transmission du flux de données (DS) sont annoncées au moyen de messages de publication-abonnement et des offres (AGB) provenant de canaux secondaires (SK) sont reçues au moyen de messages de publication-abonnement, les offres (AGB) étant soumises à un contrôle et un ou plusieurs canaux secondaires (SK) étant utilisés pour la transmission du flux de données (DS) en fonction du résultat du contrôle, **caractérisé en ce qu'**une transmission du flux de données (DS) via l'un ou les plusieurs canaux secondaires (SK) lui-même n'est pas effectuée sous la forme ou au moyen de messages de publication-abonnement.

2. Procédé selon la revendication précédente, dans lequel les offres pour l'un ou les plusieurs canaux secondaires (SK) contiennent des paramètres pour la transmission du flux de données (DS) et le contrôle prend en compte les paramètres et la transmission du flux de données (DS) s'effectue en fonction des paramètres.

3. Procédé selon l'une des revendications précédentes, dans lequel les paramètres comprennent une adresse de point d'extrémité du canal secondaire (SK).

4. Procédé selon l'une des revendications précédentes, dans lequel les paramètres comprennent un ou plusieurs protocoles de transport du canal secondaire (SK) et/ou un type de contenu du flux de données (DS), notamment vidéo et/ou audio, et/ou un encodage, en particulier un format MPEG-4, du flux de données (DS).

5. Procédé selon l'une des revendications précédentes, dans lequel les paramètres comprennent un débit de données et/ou une qualité de service du flux de données (DS).

6. Procédé selon l'une des revendications précédentes, dans lequel le flux de données (DS) est établi depuis un producteur de flux de données (DSP) vers un consommateur de flux de données (DSK).

7. Procédé selon l'une des revendications précédentes, dans lequel le ou les consommateurs de flux de données (DSK) et/ou le ou les producteurs de flux de données (DSP) sont des composants d'un système Internet des objets (IOTN), en particulier industriel.

8. Producteur de flux de données, comprenant en particulier un processeur, conçu pour mettre en œuvre un procédé selon l'une des revendications précédentes.

9. Producteur de flux de données selon la revendication précédente, dans lequel le processeur est configuré pour mettre en œuvre un procédé selon l'une des revendications 1 à 8.

10. Producteur de flux de données selon l'une quelconque des revendications 8 à 9, qui est un dispositif industriel Internet des objets et/ou qui comprend une caméra et/ou un microphone.
